# FASCICULE DE BREVET EUROPEEN

(11) **EP 1 215 860 B1**
(45) Date de publication et mention de la délivrance du brevet: **25.08.2010**
(21) Numéro de dépôt: 01403181.9
(22) Date de dépôt: 10.12.2001
(51) Int. Cl.: H04L 12/64, H04Q 11/04

(54) **Procédé et dipositif de transmission déterministe de données asynchrones mises en paquet**
Verfahren und Vorrichtung zur deterministischen Übertragung von packetierten asynchronen Daten
Method and apparatus of deterministic transmission of packetized asynchronous data

(30) Priorité: 12.12.2000 FR 0016146
(43) Date de publication de la demande: 19.06.2002
(73) Titulaire: AIRBUS OPERATIONS, 31060 Toulouse (FR)
(72) Inventeur: Mao, Jean-Pierre, 31820 Pibrac (FR)
(74) Mandataire: Poulin, Gérard

(56) Documents cités:
- WO-A-98/51114
- US-A- 5 606 559

## Description

### Domaine technique

La présente invention concerne un procédé et un dispositif de transmission déterministe de données asynchrones mises en paquet.

### Etat de la technique antérieure

Dans les dispositifs de l'art connu de transmission déterministe de données asynchrones mises en paquet, le dispositif d'acquisition et les données acquises par celui-ci sont asynchrones. La mise en paquet des données est réalisée selon un séquencement propre. Un paquet correspond à une ou plusieurs données acquises traitées avec ou sans enrobage, l'enrobage étant constitué d'une entête et d'une fin. Le nombre de données transmises dans le message de sortie correspondant à un paquet est défini selon deux critères :
- le nombre de données est borné :
   - il est toujours le même, ou
   - le maximum est défini
- la répartition des données est positionnée temporellement de façon équitemporelle ou non.

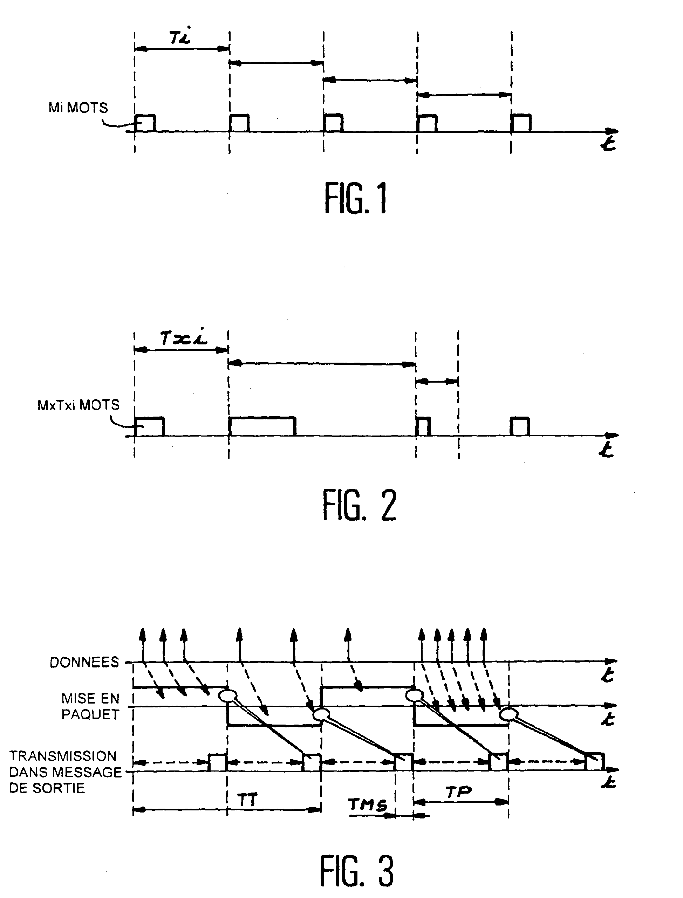

Dans un premier exemple de transmission de données issues d'un paquet i dans le message de sortie, comme illustré sur la figure 1, le nombre de données Mi est toujours le même, et réparti de façon équitemporelle (délais égaux Ti).

Dans un second exemple, de transmission de données issues d'un paquet i dans le message de sortie, comme illustré sur la figure 2, le nombre de données maximum Mi est toujours le même, il est MxTxi pendant une période de temps identifiée Txi, et réparti de façon non équitemporelle (délais variables Txi) : MxTxi varie à chaque Txi, avec MxTxi≤Mi.

Dans le domaine de l'acquisition de données et de télémesure d'installations d'essais en vol, les données numériques, ou numérisées, véhiculées sur des messages continus, et cycliques, délivrés par des systèmes d'acquisition et de traitement de l'art connu sont stockées dans des piles FIFO ("First in - First out") au fur et à mesure de leur arrivée. Les données arrivent de manière totalement asynchrone.

Un module de mise en paquet permet de mettre certaines données issues de ces piles FIFO suivant un ordre prédéfini. Il permet également d'enrichir ces données avec des éléments du type calcul de date relative, identification de la donnée, mise en forme de la donnée, etc... Un paquet ainsi obtenu est donc un groupement de données ayant un format précis et contenant des données dans un ordre précis.

Un module de mise en paquet fonctionne suivant la succession d'étapes suivantes :
1) réception des données contenues dans les piles FIFO (vidage),
2) début de mise en paquet,
3) mise en paquet, avec tri et enrichissement des données,
4) fin de la mise en paquet,
5) envoi du paquet à un module de constitution du message.

Ce module de constitution du message récupère, les uns après les autres, les paquets créés par les modules de mise en paquet. Un message est alors constitué de paquets successifs, dans un ordre prédéfini.

Un module de mise en forme permet alors de mettre le message au format électrique dans le protocole utilisé pour la transmission.

Le cycle de fonctionnement du module de mise en paquet est autonome. Lorsque le module de constitution du message a besoin d'un paquet, il envoie une demande au module de mise en paquet qui transmet le paquet s'il est constitué, c'est-à-dire si l'étape 4 est terminée. Sinon, il n'envoie rien ou bien un paquet vide pour ne pas bloquer le module de constitution du message. Les données sont transmises via les différentes étapes 1 à 5 : les données arrivent, elles sont mises en paquet par un dispositif autonome qui a sa vie propre, puis elles ne sont transférées dans le message que si le paquet est prêt. Le message peut ne pas contenir une donnée, uniquement parce que la mise en paquet n'est pas terminée.

Dans ces dispositifs de l'art connu, les données véhiculées sur les messages sont à des emplacements fixes dans le temps. Ce sont des messages de type PCM qui répondent à la norme IRIG106. Le formalisme de la mise en paquet, un paquet pouvant être constitué d'une donnée, est normalisé. Par contre cette norme ne précise rien sur le temps de transmission des paquets. Il en est de même pour les normes CE83 et CCSDS.

Comme illustré sur la figure 3, les données et la transmission dans le message de sortie sont asynchrones, le temps de transmission TT varie donc entre le temps de mise en paquet TP et une durée 2*TP égale à deux fois ce temps, le temps de transmission dans le message de sortie TMS étant tel que : TMS<<TP.

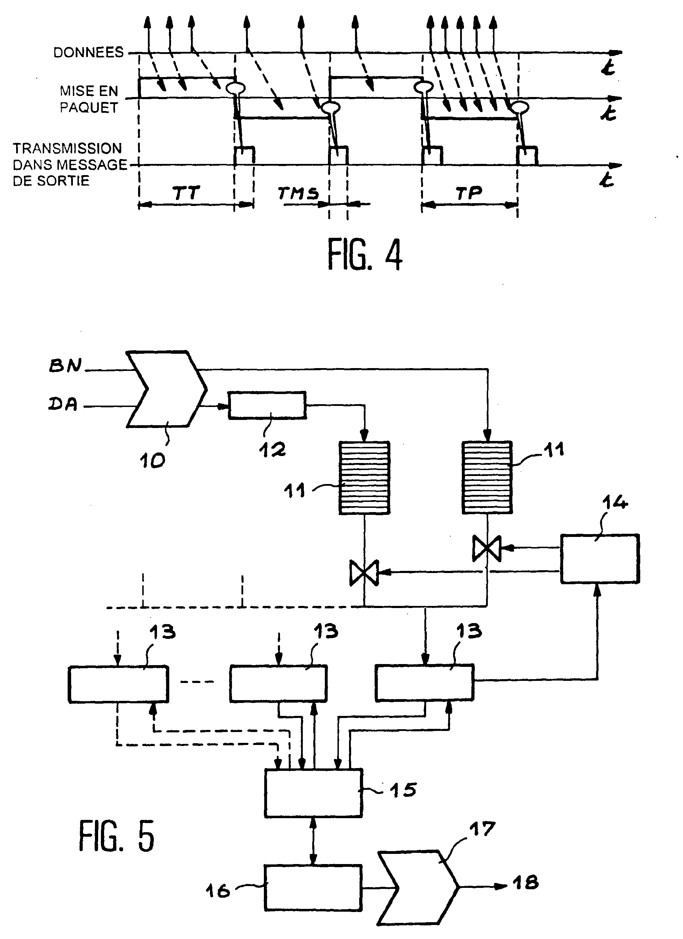

Une demande de brevet WO 98/51114 décrit un système de télécommunications dans lequel un mode de transfert asynchrone (ATM) est utilisé pour transporter des données par exemple de type audio, vidéo, ou de commande. Ce système permet la transformation de données d'émulation en une suite de paquets de données d'émulation de circuit, puis l'insertion de ces paquets dans une cellule de transfert de données, la longueur de chaque paquet étant contrôlée comme une fonction d'une horloge de mise en forme de ladite cellule. Dans un mode de réalisation, illustré sur la figure 5A, cette horloge de mise en forme est divisée par une valeur K, qui est une variable ajustable par opérateur. Ainsi, un opérateur peut en ajustant cette valeur contrôler la période de l'horloge et donc la longueur de paquets.

L'invention a pour objectif de pallier les inconvénients des dispositifs de l'art connu, en permettant :
- de transmettre le maximum de données dans le message de sortie,
- de maîtriser le temps de transmission des données acquises,
- d'avoir le rapport nombre de données acquises/enrobage du paquet le plus grand possible.

### Exposé de l'invention

L'invention concerne un procédé de transmission déterministe de données asynchrones mises en paquet, dans lequel les données arrivant de manière asynchrone sont stockées dans des piles au fur et à mesure de leur arrivée, ledit procédé étant **caractérisé en ce qu**'il comprend les étapes suivantes :
- réception des données contenues dans un ensemble de piles dans un de plusieurs modules de mise en paquets, début de mise en paquet, mise en paquet avec tri et enrichissement des données, fin de la mise en paquet, et envoi du paquet constitué,
- envoi par un module de constitution de message, qui reçoit les sorties de tous les modules de mise en paquet, d'un ordre de fin de constitution de paquet à un module de mise en paquet,
- arrêt de la constitution du paquet en cours de réalisation dans un module de mise en paquet, transmission du paquet ainsi constitué, début du cycle de réalisation d'un nouveau paquet,

- récupération les uns après les autres des paquets ainsi créés, dans un ordre prédéfini, dans le module de constitution de message,
- mise du message, constitué dans le module de constitution de message, au format électrique dans le protocole utilisé pour la transmission.

Dans ce procédé on utilise un module de mise en paquet qui n'est plus autonome.

Dans ce procédé, dès que le module de constitution du message réclame un paquet, il le reçoit car c'est lui qui commande le cycle de mise en paquet.

Contrairement aux dispositifs de l'art connu, dans lesquels on ne constitue les messages qu'avec des paquets "bien finis" (avec le risque d'avoir des paquets vides), dans le procédé de l'invention chaque message emporte des paquets peut-être "moins bien finis", mais toutes les données pouvant être transmises le sont dès la demande de transmission. Le temps de transition d'une donnée entre l'entrée et la sortie d'un dispositif mettant en oeuvre ce procédé est donc maîtrisé.

L'invention concerne également un dispositif de transmission déterministe de données asynchrones mises en paquet comprenant :
- au moins un module d'entrée recevant les données d'entrée,
- des piles recevant des données numériques provenant de ce module d'entrée,
- plusieurs modules de mise en paquet relié chacun à au moins une pile,
- au moins un module de commande de vidage de pile piloté par au moins un module de mise en paquet,
- un module de constitution de message, recevant les sorties de tous les modules de mise en paquet, et pouvant envoyer à chacun d'eux un ordre de fin de constitution de paquet,
- un module de mise en forme de paquets,
- un module de sortie apte à délivrer chaque paquet constitué sur une ligne de transmission.

Le procédé et le dispositif de l'invention peuvent être utilisés notamment dans des systèmes d'acquisition, et de traitement temps réel de données d'installations d'essai de nouveaux avions. La solution proposée dans l'invention pour de tels systèmes présente les avantages suivants. Pour suivre les essais de vibrations (ou "flutter") qui sont très risqués pour un avion, il est impératif de maîtriser parfaitement le temps de transmission TT, puisque les données utiles acquises doivent être présentées à un spécialiste avec un retard TT soit inférieur à 100 ms, soit paramétrable en fonction du type d'essai. Avec la solution préconisée dans l'invention TT = TP, alors que dans les dispositifs de l'art connu on a : TP<TT<=2*TP avec l'hypothèse TMS<<TP. Les objectifs sont donc optimisés avec la solution de l'invention : En effet à TT fixé, TP est plus grand avec la solution préconisée qu'avec la solution des dispositifs de l'art connu.

### Brève description des dessins

- Les figures 1 et 2 illustrent deux exemples de transmission de données issues d'un paquet, dans un dispositif de l'art connu.
- La figure 3 illustre un exemple de fonctionnement d'un dispositif de l'art connu.
- La figure 4 illustre le fonctionnement du procédé de l'invention.
- La figure 5 illustre le dispositif de l'invention.
- La figure 6 illustre un exemple de fonctionnement du dispositif de l'invention illustré sur la figure 5.
- Les figures 7 et 8 illustrent un exemple de réalisation pour une acquisition de bus arinc429 en utilisant respectivement un dispositif de l'art connu, et le dispositif de l'invention.

### Exposé de modes de réalisation

Le procédé de transmission déterministe de données asynchrones mises en paquet de l'invention, dans lequel les données arrivant de manière asynchrone sont stockées dans des piles FIFO au fur et à mesure de leur arrivée, comprend les étapes suivantes :
- réception des données contenues dans les piles,
- début de mise en paquet,
- mise en paquet avec tri et enrichissement des données,
- fin de mise en paquet,
- envoi du paquet à un module de constitution de message qui récupère les uns après les autres les paquets créés, dans un ordre prédéfini,
- et, lorsque ce module de constitution de message a besoin d'un paquet :
   - arrêt de la constitution du paquet en cours de réalisation,
   - transmission du paquet ainsi constitué,
   - début du cycle de réalisation d'un nouveau paquet.

Comme illustré sur la figure 4, le procédé de l'invention consiste à synchroniser les débuts et fins des constitutions de paquets par rapport à leurs transmissions dans le message de sortie ; TMS étant le temps de transmission dans le message de sortie, TP le temps de mise en paquet, et TT le temps de transmission avec TT = TP + TMS. La solution obtenue avec TP»TMS, permet de satisfaire au mieux les objectifs définis précédemment.

Pour un paquet identifié, la mise en paquet limite le nombre de données acquises à une valeur n. Si pendant le temps TP, il y a n + m données à mettre en paquet, m données sont alors perdues.

Le dispositif de l'invention, illustré sur la figure 5, comprend :
- au moins un module d'entrée 10 recevant des données d'entrée, par exemple un bus numérique BN et des données analogiques DA,
- au moins un ensemble de piles 11 recevant des données numériques provenant de ce module d'entrée, au travers éventuellement d'un convertisseur analogique/numérique 12, relié à au moins un module de mise en paquet 13,
- au moins un module de commande de vidage de pile 14 piloté par au moins un module de mise en paquet 13,
- un module de constitution de message 15, recevant les sorties de tous les modules de mise en paquet 13, et pouvant envoyer à chacun d'eux un ordre de fin de constitution de paquet,
- un module de mise en forme des paquets 16,
- un module de sortie 17 apte à délivrer chaque paquet constitué sur une ligne de transmission 18.

Dans le dispositif de l'invention, les données numériques, ou numérisées, sont stockées dans les piles FIFO 11 au fur et à mesure de leur arrivée. Les données arrivent de manière totalement asynchrone : vu du dispositif, leur arrivée est aléatoire.

Chaque module de mise en paquet 13 a pour rôle de mettre certaines données issues des piles 11 suivant un ordre prédéfini. Il peut aussi enrichir ces données avec des éléments du type calcul de date relative, identification de la donnée, mise en forme de la donnée. Un paquet est donc un groupement de données ayant un format précis et contenant des données dans un ordre précis.

Comme décrit précédemment, chaque module de mise en paquet 13 fonctionne suivant le cycle suivant :
1) Réception des données contenues dans les piles,
2) début de la mise en paquet,
3) mise en paquet avec tri et enrichissement des données,
4) fin de la mise en paquet,
5) envoi du paquet au module de constitution du message.

Ce qui différencie le dispositif de l'invention des dispositifs de l'art connu, c'est la manière dont chaque tâche 1 à 5 est déclenchée.

Le module de constitution du message 15 récupère, les uns après les autres, les paquets créés par les modules de mise en paquet 13 successifs, dans un ordre prédéfini.

Le cycle de fonctionnement de ce module 13 n'est pas autonome. Lorsque le module de constitution de message 15 a besoin d'un paquet, il lui envoie la demande. Celui-ci stoppe la constitution du paquet en cours de réalisation. Il transmet le paquet ainsi constitué puis commence le cycle de réalisation d'un nouveau paquet.

Le module de mise en forme 16 est chargé de mettre le message 15 au format électrique dans le protocole utilisé pour la transmission (fonction et réalisation connues).

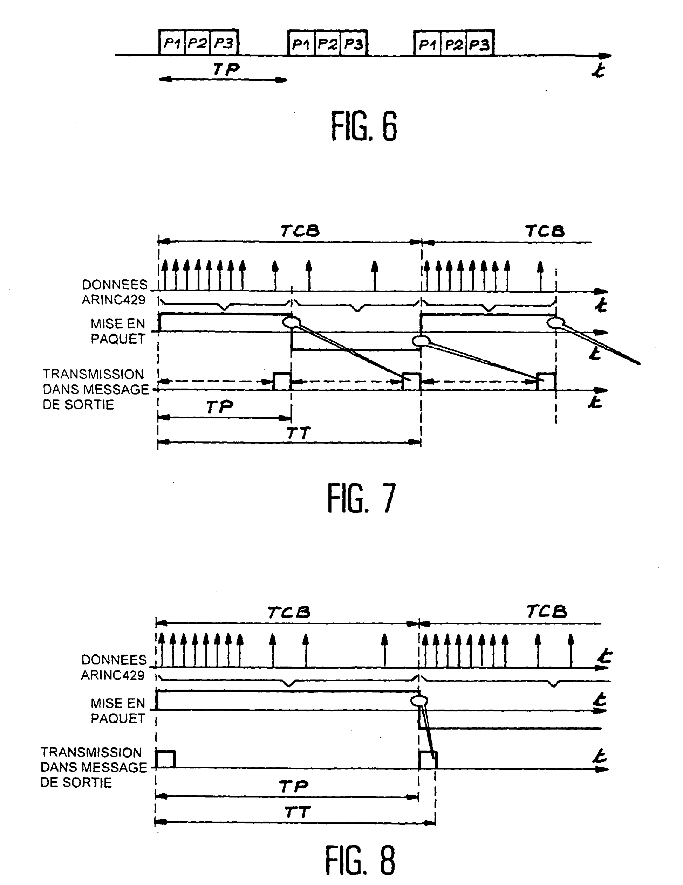

Dans un exemple de fonctionnement, le dispositif de l'invention comprend trois modules de mise en paquet 13. La constitution des paquets qu'ils génèrent (respectivement P1, P2, P3) est sans importance (tri des données, enrichissements, etc.) Comme illustré sur la figure 6, un message est constitué de la succession de trois paquets : P1 suivi de P2 suivi de P3, qui sont transmis par le module de constitution du message 15 au module de mise en forme 16, TP étant le temps de mise en paquet. Dans cet exemple on ne tient pas compte des éléments d'enrobage (début de trame, fin de trame, checksum, etc.) réalisé par le module de mise en forme 16.

On va à présent considérer un exemple de réalisation qui est celui d'une acquisition de bus arinc429 dans l'hypothèse où TMS<<TP, TCB étant le temps de cycle bus ; le nombre de données étant toujours le même, et réparti de façon équitemporelle :
- La figure 7 illustre le fonctionnement d'un dispositif de l'art connu.
- La figure 8 illustre le fonctionnement du dispositif de l'invention, comme décrit ci-dessus.

Les avantages de la solution proposée par l'invention par rapport aux dispositifs de l'art connu sont illustrés dans le tableau 1 en fin de description. Le dispositif de l'invention répond aux objectifs définis précédemment et fait apparaître un gain très significatif par rapport aux dispositifs de l'art connu.

**Tableau 1**

| Message de sortie pour la fenêtre de temps TT | Dispositif de l'art connu | Dispositif de l'invention | Dispositif de l'art connu-Dispositif de l'invention/Dispositif de l'invention =>GAIN |
|---|---|---|---|
| Nombre de données | 18 | 11 | 64% |
| Nombre d'enrobages | 2 | 1 | 100% |

## Revendications

1. Procédé de transmission déterministe de données asynchrones mises en paquet, dans lequel les données arrivant de manière asynchrone sont stockées dans des piles (11) au fur et à mesure de leur arrivée, ledit procédé comprenant les étapes suivantes :
- réception des données contenues dans un ensemble de piles dans un de plusieurs modules de mise en paquets (13), début de mise en paquet, mise en paquet avec tri et enrichissement des données, fin de la mise en paquet, et envoi du paquet constitué,
- envoi par un module de constitution de message (15), qui reçoit les sorties de tous les modules de mise en paquet (13), d'un ordre de fin de constitution de paquet à un module de mise en paquet (13).
- arrêt de la constitution du paquet en cours de réalisation dans un module de mise en paquet (13), transmission du paquet ainsi constitué, début du cycle de réalisation d'un nouveau paquet,
- récupération les uns après les autres des paquets ainsi créés, dans un ordre prédéfini, dans le module de constitution de message (15),
- mise du message, constitué dans le module de constitution de message (15), au format électrique dans le protocole utilisé pour la transmission.

2. Dispositif de transmission déterministe de données asynchrones mises en paquet comprenant :
- au moins un module d'entrée (10) recevant les données d'entrée arrivant de manière asynchrone,
- des piles (11) recevant des données numériques provenant de ce module d'entrée,
- plusieurs modules de mise en paquet (13), relié chacun à au moins une pile (11), permettant une mise en paquet avec tri et enrichissement des données,
- au moins un module de commande de vidage de pile (14) piloté par au moins un module de mise en paquet (13),
- un module de constitution de message (15), recevant les sorties de tous les modules de mise en paquet (13), permettant d'envoyer à un module de mise en paquets (13) un ordre de fin de constitution de paquet, ce module de constitution de message (15) récupérant les paquets créés par les modules de mise en paquet (13) successifs dans un ordre prédéfini,
- un module de mise en forme de paquets (16), permettant de mettre le message issu du module de constitution de message au format électrique dans le protocole utilisé pour la transmission,
- un module de sortie (17) apte à délivrer chaque paquet constitué sur une ligne de transmission (18).

3. Systèmes d'acquisition et de traitement temps réel de données d'installations d'essais de nouveaux avions, adapté pour mettre en oeuvre le procédé de la revendication 1.

## Claims

1. Process for deterministic transmission of asynchronous data in packets, in which data arriving synchronously is stored in batteries (11) as and when it arrives, the said process comprising the following stages:
- reception of data contained in a set of batteries in one or several packeting modules (13), start of packeting, packeting with sorting and enhancement of data, end of packeting and sending of the made-up packet,
- stoppage of packet make-up in the course of realization in a packeting module (13) when a message composition module (15) needs this packet, transmission of the packet thus made up, and start of the realization cycle of a new packet,
- recovery one after another of the packets thus created, in a predefined order, in the message composition module (15),
- setting of the message, made up in the message composition module (15) to the electrical format in the protocol used for the transmission.

2. Device for deterministic transmission of asynchronous data in packets comprising:
- at the least one input module (10) receiving the input data,
- batteries (11) receiving digital data coming from this input module,
- several packeting modules (13) each connected to at least one battery (11),
- at the least one control module for battery dump (14) monitored by at least one packeting module (13),
- a message composition module (15) receiving the outputs of all the packeting modules (13) and able to send to each of them an order for end of packet make-up
- a module for formatting packets (16),
- an output module (17) capable of issuing each made-up packet on a transmission line (18).

3. Data acquisition and real-time processing system for test installations of new aeroplanes, adapted to implement the process of claim 1.

## Patentansprüche

1. Verfahren zur deterministischen Übertragung von paketierten asynchronen Daten, wobei die asynchron ankommenden Daten in Stapeln (11) je nach deren Ankunft gespeichert werden, wobei das Verfahren die folgenden Schritte umfasst:
- Aufnahme von Daten, die in einem Stapelsystem enthalten sind, in eines von mehreren Paketierungsmodulen (13), Beginn der Paketierung, Paketierung mit Sortieren und Erweitern der Daten, Ende der Paketierung und Absendung des gebildeten Pakets,
- Absendung über ein Modul zum Aufbau einer Nachricht (15), das die Signale von allen Paketierungsmodulen (13) empfängt, mit einer Anweisung zur Beendigung der Paketbildung an ein Paketierungsmodul (13),
- Anhalten der Paketbildung im Laufe der Durchführung in einem Paketierungsmodul (13), Übertragung des so gebildeten Pakets, Beginn des Durchführungszyklus für ein neues Paket,
- Sammeln der so erzeugten Pakete, eins nach dem anderen, nach einer vorgegebenen Reihenfolge in dem Modul zum Aufbau einer Nachricht (15),
- Umwandeln der Nachricht, die in dem Modul zum Aufbau einer Nachricht (15) gebildet wurde, in das elektrische Format in dem zur Übertragung verwendeten Protokoll.

2. Vorrichtung zur deterministischen Übertragung von paketierten asynchronen Daten, umfassend:
- mindestens ein Eingangsmodul (10) zur Aufnahme von asynchron ankommenden Eingangsdaten,
- Stapel (11) zur Aufnahme von aus diesem Eingangsmodul kommenden digitalen Daten,
- mehrere Paketierungsmodule (13), die jeweils mit mindestens einem Stapel (11) verbunden sind, die eine Paketierung mit Sortieren und Erweiterung der Daten ermöglichen,
- mindestens ein Steuermodul zur Stapelleerung (14), das über mindestens ein Paketierungsmodul (13) gesteuert wird,
- ein Modul zum Aufbau einer Nachricht (15), das die Signale von allen Paketierungsmodulen (13) empfängt, durch das eine Anweisung zur Beendigung der Bildung eines Pakets an ein Paketierungsmodul (13) geschickt werden kann, wobei das Modul zum Aufbau einer Nachricht (15) die durch die Paketierungsmodule (13) erzeugten, aufeinanderfolgenden Pakete in einer vorgegebenen Reihenfolge sammelt,
- ein Modul zur Formung von Paketen (16), das das Umwandeln der aus dem Modul zum Aufbau einer Nachricht hervorgehenden Nachricht in das elektrische Format in dem für die Übertragung verwendeten Protokoll ermöglicht,
- ein Ausgangsmodul (17), das zur Ausgabe jedes gebildeten Pakets auf eine Übertragungsleitung (18) geeignet ist.

3. System zur Echtzeitsammlung und -behandlung von Daten von Versuchsanlagen neuer Flugzeuge, das zur Durchführung des Verfahrens nach Anspruch 1 angepasst ist.
